# EUROPÄISCHE PATENTSCHRIFT

(11) **EP 3 142 880 B1**
(45) Veröffentlichungstag und Bekanntmachung des Hinweises auf die Patenterteilung: **29.08.2018**
(21) Anmeldenummer: 15717506.8
(22) Anmeldetag: 22.04.2015
(51) Int. Cl.: B60J 7/02, B60J 7/043

(54) **ANORDNUNG MIT EINEM DECKEL FÜR EIN FAHRZEUGDACH**
ARRANGEMENT WITH A COVER FOR A VEHICLE ROOF
DISPOSITIF D'UN COUVERCLE POUR UN TOIT DE VÉHICULE

(30) Priorität: 14.05.2014 DE 102014106813; 10.07.2014 DE 102014109698
(43) Veröffentlichungstag der Anmeldung: 22.03.2017
(73) Patentinhaber: Webasto SE, 82131 Stockdorf (DE)
(72) Erfinder: HÖLZEL, Dominik, 82140 Olching (DE)
(74) Vertreter: Epping - Hermann - Fischer
(86) Internationale Anmeldenummer: PCT/EP2015/058706
(87) Internationale Veröffentlichungsnummer: WO 2015/172987

(56) Entgegenhaltungen:
- EP-A1- 2 263 897
- EP-A1- 2 727 755
- EP-A2- 1 535 780
- DE-A1-102012 106 545
- DE-U1-202010 012 974

## Beschreibung

Die Erfindung betrifft eine Anordnung mit einem Deckel für ein Fahrzeugdach, der ausgehend von einer Schließstellung zum Verschließen einer Dachöffnung zum Öffnen durch Ausstellmittel in seinem hinteren Bereich anhebbar und nach hinten in eine Offenstellung verschiebbar ist.

Derartige Anordnungen mit einem Deckel für ein Fahrzeugdach sind aus dem Stand der Technik vielfach bekannt. Typischerweise wird beim Öffnungsvorgang ein Antriebsschlitten in Fahrzeuglängsrichtung nach hinten verschoben. In seitlichen Bereichen des Deckels sind Ausstellmittel vorgesehen, um den Deckel in eine Lüfterstellung anzuheben, bevor er weiter nach hinten in eine Offenstellung zum Freigeben der Dachöffnung verschoben wird.

Die Ausstellmittel, welche typischerweise Komponenten wie Hebel, Lager und/oder Kulissenführungen aufweisen, benötigen zum Ermöglichen des Öffnungsvorgangs einen entsprechenden Bauraum, welcher mit unter den Platz einer Fahrgastzelle eines Fahrzeugs verringert.

Aus der DE 10 2012 106545 A1, welche als nächster Stand der Technik gilt, ist eine Verstellvorrichtung für einen Dachdeckel eines öffnungsfähigen Fahrzeugdachs bekannt. Aus der EP 1 535 780 A2 ist eine Sonnendachvorrichtung für ein Fahrzeug bekannt.

Aus der EP 2 263 897 A1 ist eine Offendachkonstruktion für ein Fahrzeug bekannt.

Eine Aufgabe, die der Erfindung zugrunde liegt, ist es, eine Anordnung mit einem Deckel für ein Fahrzeugdach zu beschreiben, welche sich durch eine geringe Beanspruchung von Bauraum auszeichnet.

Erfindungsgemäß wird eine Anordnung mit einem Deckel für ein Fahrzeugdach beschrieben, der ausgehend von einer Schließstellung zum Verschließen einer Dachöffnung zum Öffnen durch Ausstellmittel in seinem hinteren Bereich anhebbar und nach hinten über das Fahrzeugdach in eine Offenstellung verschiebbar ist. Die Ausstellmittel weisen einen mittels eines Antriebs in einer Führungsschiene in Fahrzeuglängsrichtung verschiebbaren Schlitten auf. Weiter weisen die Ausstellmittel einen bezüglich der Fahrzeuglängsrichtung hinteren Ausstellhebel auf, welcher schwenkbar mit dem Deckel sowie schwenkbar mit einem bezüglich der Führungsschiene ortsfesten Lager gekoppelt ist und welcher ein erstes Koppelelement aufweist. Des Weiteren weisen die Ausstellmittel eine Ausstellstange auf, welche über das erste Koppelelement mit dem hinteren Ausstellhebel schwenkbar gekoppelt ist und mittels des Schlittens zum Ausstellen des hinteren Ausstellhebels in Fahrzeuglängsrichtung verschiebbar ist. Das ortsfeste Lager ist derart angeordnet, dass eine Schwenkachse des ortsfesten Lagers oberhalb eines Bodens der Führungsschiene angeordnet ist und wobei die Ausstellstange derart mit dem ersten Koppelelement gekoppelt ist, dass ausgehend von der Schließstellung des Deckels bei einem Verschieben des Schlittens in Fahrzeuglängsrichtung die Ausstellstange das ortsfeste Lager überfährt.

Das Verschieben des Deckels über das Fahrzeugdach bedeutet, dass der Deckel nach einem Anheben oder Ausstellen im Bereich einer hinteren Kante des Deckels über eine Außenseite des Fahrzeugdachs geschoben wird. Bevorzugt handelt es sich bei der Anordnung um eine Anordnung für ein Spoilerdach.

Die verwendeten Ortsangaben oder Richtungsangaben wie "hinten" oder "vorne" sind auf die Fahrzeuglängsrichtung bezogen. Die Fahrzeuglängsrichtung kann auch als Horizontalrichtung oder X-Richtung bezeichnet werden. Das Ausstellen bzw. Anheben des Deckels erfolgt im Wesentlichen in einer Vertikalrichtung beziehungsweise Z-Richtung. Unter dem hinteren Bereich des Deckels ist beispielsweise der Bereich zu verstehen, welcher ausgehend von einer Mitte des Deckels einem Fahrzeugheck zugewandt ist.

Die Anordnung sieht vor, dass das ortsfeste Lager für den hinteren Ausstellhebel derart angeordnet ist, dass eine Schwenkachse des ortsfesten Lagers oberhalb des Bodens der Führungsschiene angeordnet ist. Als Boden der Führungsschiene wird hierbei eine Ebene verstanden, welche annähernd parallel zu einem Fahrzeugdach des Fahrzeugs unterhalb des Schlittens verläuft. Mit anderen Worten wird mit Boden der Bereich der Führungsschiene bezeichnet, welcher in Schließstellung des Deckels den größten Abstand zu dem Deckel in Vertikalrichtung hat.

Zum Ausstellen des hinteren Ausstellhebels wird die Ausstellstange mittels des Schlittens in Fahrzeuglängsrichtung nach hinten verschoben. Dabei wird der hintere Ausstellhebel bezüglich der Schwenkachse des ortsfesten Lagers verschwenkt. Zusätzlich überfährt die Ausstellstange das ortsfeste Lager, damit die Ausstellstange nicht mit dem ortsfesten Lager kollidiert. Überfahren bedeutet im vorliegenden Kontext, dass die Ausstellstange während des Verschiebens des Schlittens zumindest im hinteren Bereich eine Vertikalbewegung vollführt, also eine Bewegung in Z-Richtung. Mit anderen Worten ist das ortsfeste Lager im Wesentlichen auf selber Höhe wie die Ausstellstange in Schließstellung des Deckels angeordnet. Bei Verschieben der Ausstellstange wird diese über das Lager geführt.

Die Anordnung ermöglicht, den benötigten Bauraum erheblich zu reduzieren, da insbesondere das ortsfeste Lager nicht unterhalb des Bodens der Führungsschiene angeordnet werden muss. Dadurch kann bei Verwenden der Anordnung in einem Fahrzeug der Platz einer Fahrgastzelle vergrößert werden, was beispielsweise mehr Kopffreiheit für Insassen des Fahrzeugs ermöglicht. Des Weiteren können durch die Anordnung so genannte "Wassersäcke" vermieden werden. Würde das ortsfeste Lager unterhalb des Bodens der Führungsschiene angeordnet sein, so müsste in der Dachkonstruktion des Fahrzeugs eine in Schwerkraftrichtung ausgebildete Ausnehmung vorgesehen werden, in welcher sich Wasser sammeln kann. Dieses Wasser wäre nur schwer ableitbar und würde beispielweise eine Korrosion von Bauteilen begünstigen.

Gemäß einer Ausgestaltung der Erfindung weist die Ausstellstange zur Kopplung mit dem hinteren Ausstellhebel eine erste Kulisse auf, welche mit dem ersten Koppelelement des hinteren Ausstellhebels in Eingriff ist, so dass die erste Kulisse ausgehend von der Schließstellung des Deckels bei Verschieben des Schlittens ein Ausstellen des Deckels steuert. Durch Vorsehen der ersten Kulisse wird ein besonders reibungsarmes und mit möglichst geringen Kräften verbundenes Ausstellen bzw. Anheben des Deckels ermöglicht. Des Weiteren kann die Ausstellstange mit der ersten Kulisse einstückig hergestellt werden.

Gemäß einer weiteren Ausgestaltung der Erfindung weist die erste Kulisse in Schließstellung des Deckels einen Verlauf auf, bei welchem sich ein Abstand zwischen der ersten Kulisse und dem Deckel in Fahrzeuglängsrichtung nach hinten zunächst verändert und anschließend gleich bleibt. Unter der Abstandsveränderung wird dabei eine wesentliche Änderung des Abstandes verstanden, wobei der Verlauf beispielsweise kurven-, rampen- oder stufenförmig verläuft. Unter dem Gleichbleiben des Abstands wird dabei verstanden, dass sich der Abstand gar nicht oder lediglich in sehr geringem Maße, beispielsweise unter einem kleinen Winkel bezüglich der Fahrzeuglängsrichtung, verändert. Beispielsweise kann sich der Abstand zu dem Deckel nach hinten verringern oder vergrößern.

Gemäß einer weiteren Ausgestaltung der Erfindung weist in Schließstellung des Deckels ein Verlauf der ersten Kulisse einen vorderen Abschnitt, welcher im Wesentlichen vertikal verläuft, einen mittleren Abschnitt, in welchem sich ein Abstand zwischen der ersten Kulisse und dem Deckel in Fahrzeuglängsrichtung nach hinten vergrößert, sowie einen hinteren Abschnitt auf, in welchem der Abstand zwischen der ersten Kulisse und dem Deckel gleich bleibt. Dabei ist das Gleichbleiben bzw. Verändern des Abstands analog zu oben zu verstehen.

Durch einen derartigen Verlauf der ersten Kulisse ist es möglich, dass bei Verschieben des Schlittens die Ausstellstange relativ bezüglich des hinteren Ausstellhebels verschoben wird, ehe diese ein Ausstellen des hinteren Ausstellhebels steuert.

Gemäß einer weiteren Ausgestaltung der Erfindung ist das erste Koppelelement des hinteren Ausstellhebels nahe der schwenkbaren Kopplung zwischen dem hinteren Ausstellhebel und dem Deckel angeordnet, insbesondere näher als an der schwenkbaren Kopplung zwischen dem hinteren Ausstellhebel und dem fahrzeugfesten Lager. Dadurch kann ein besonders gutes Abstützverhältnis im ausgestellten Zustand des Deckels erzielt werden. Im ausgestellten Zustand, etwa in der Lüfterstellung des Deckels, ist die Ausstellstange relativ zur Führungsschiene in X-Richtung verriegelt. Dabei muss die Ausstellstange die Kräfte des Deckels insbesondere in X-Richtung aufnehmen. Diese Kräfte hängen in großem Maße von einem Hebelmoment zwischen dem ersten Koppelelement und der Schwenkachse des ortsfesten Lagers zusammen. Dadurch, dass das erste Koppelelement nahe an der schwenkbaren Kopplung zwischen dem hinteren Ausstellhebel und dem Deckel angeordnet ist, wird ein größeres Hebelmoment erreicht im Vergleich zu einem Koppelelement, welches nahe an der schwenkbaren Kopplung zwischen dem hinteren Ausstellhebel und dem ortsfesten Lager angeordnet ist, also nahe an der Schwenkachse. Insbesondere wenn das ortsfeste Lager unterhalb des Bodens der Führungsschiene angeordnet ist und die Ausstellstange im Wesentlichen parallel zur Fahrzeuglängsrichtung beziehungsweise parallel zur Dachhaut verschoben wird, würde ein geringes Hebelmoment erzeugt werden. Das große Hebelmoment hat den Vorteil, dass die Ausstellstange weniger Kraft aufnehmen muss, um die Kräfte in X-Richtung aufzunehmen und die X-Verriegelung zu gewährleisten. Demzufolge kann die Ausstellstange auch kleiner dimensioniert sein, wodurch unteren anderem Herstellungs- und Materialkosten eingespart werden können.

Gemäß einer weiteren Ausgestaltung der Erfindung weist die Anordnung weiter eine bezüglich der Führungsschiene ortsfeste zweite Kulisse auf. Des Weiteren weist die Ausstellstange ein zweites Koppelelement auf, welches im Eingriff mit der zweiten Kulisse ist, so dass die zweite Kulisse ausgehend von einer Schließstellung des Deckels bei Verschieben des Schlittens das Überfahren des ortsfesten Lagers steuert. Mittels der zweiten Kulisse ist die Ausstellstange über das zweite Koppelelement relativ verschiebbar bezüglich der Fahrzeuglängsrichtung und der Führungsschiene geführt. Insbesondere steuert die zweite Kulisse das Überfahren, also wie eingangs erwähnt das vertikale Anheben der Ausstellstange während des Verschiebens des Schlittens über das ortsfeste Lager.

Weitere Ausgestaltungen sind in den Unteransprüchen und in der nachfolgenden, ausführlichen Beschreibung eines Ausführungsbeispiels offenbart.

Das Ausführungsbeispiel ist unter Zuhilfenahme der angehängten Figuren nachfolgend beschrieben.

In den Figuren zeigen:
- Figur 1: eine schematische, perspektivische Ansicht eines Fahrzeuges,
- Figur 2: eine Seitenansicht einer Anordnung mit einem Deckel für ein Fahrzeugdach des Fahrzeugs,
- Figur 3: eine vergrößerte, teilgeschnittene Seitenansicht der Anordnung in einer Schließstellung,
- Figur 4: eine vergrößerte, teilgeschnittene Seitenansicht der Anordnung in einer teilweisen Lüfterstellung, und
- Figur 5: eine vergrößerte, teilgeschnittene Seitenansicht der Anordnung in einer Lüfterstellung.

Elemente oder Merkmale gleicher Konstruktion oder Funktion sind figurenübergreifend mit den gleichen Bezugszeichen versehen. Bereits mit Hilfe von Bezugszeichen beschriebene Elemente oder Merkmale sind nicht zwingend in allen Figuren mit Bezugszeichen versehen.

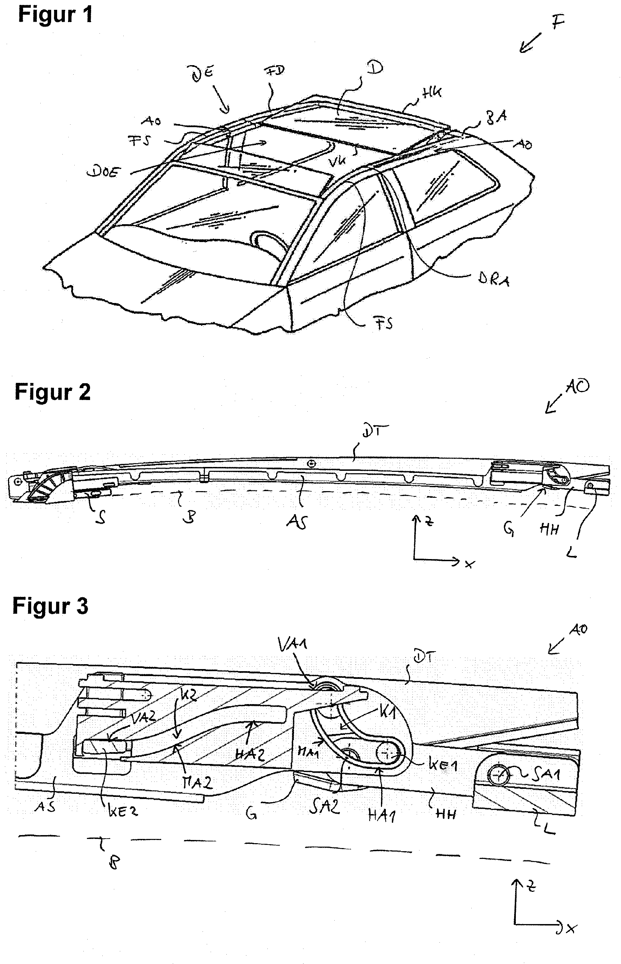

Figur 1 zeigt eine schematische, perspektivische Ansicht eines Fahrzeugs F mit einem Fahrzeugdach FD. Das Fahrzeugdach FD weist einen fahrzeugfesten Befestigungsabschnitt BA auf, der als Dachschale ausgebildet ist. Der fahrzeugfeste Befestigungsabschnitt BA ist mit einer Dachöffnung DOE versehen, die mittels eines verstellbaren, beweglichen Dachelements DE wahlweise verschlossen oder zumindest teilweise freigebbar ist.

Die Dachöffnung DOE wird von einem an dem Fahrzeugdach FD ausgebildeten Dachrahmenabschnitt DRA begrenzt. Der Dachrahmenabschnitt DRA hat vorzugsweise beidseitig angeordnete Führungsschienen FS.

Das Dachelement DE hat einen Deckel D und ist relativ verschiebbar bezüglich der Führungsschienen FS im Bereich des Befestigungsabschnitts BA gelagert. Dabei ist das Dachelement DE über einen Deckelträger und Anordnungen AO in den Führungsschienen FS verschiebbar gelagert. Der Deckel D ist vorzugsweise als Glasdeckel ausgebildet.

Die im Bereich der Führungsschienen FS angeordneten Anordnungen AO dienen dem Zweck, den Deckel D, der die Dachöffnung DOE des Fahrzeugdachs FD verschließt, aus einer Schließstellung in eine Offenstellung zu verschieben, um so die Dachöffnung DOE des Fahrzeugdachs FD freizugeben. Hierzu weisen die Anordnungen AO Ausstellmittel auf. Zum Öffnen wird der Deckel D über einen hinteren Teil des Fahrzeugdachs FD geschoben. Dazu ist es erforderlich, dass der Deckel D angehoben wird, da er in Schließstellung bündig mit der Oberseite des Fahrzeugdachs FD schließt. Bei einem typischen Bewegungsablauf wird zunächst eine hintere Kante HK des Deckels D ausgestellt. Diese Zwischenposition wird auch als Lüfterstellung bezeichnet. Im weiteren Verlauf der Öffnungsbewegung wird der Deckel D danach in Fahrzeuglängsrichtung nach hinten über das Fahrzeugdach FD in die Offenstellung verschoben.

Dieser typische Bewegungsablauf wird mit Hilfe der Anordnungen AO bewerkstelligt, welche anhand der folgenden Figuren 2 bis 5 genauer beschrieben werden. Dabei ist in den Figuren 2 bis 5 jeweils nur eine Anordnung AO auf einer Seite mit der zugehörigen Mechanik dargestellt. Alle Teile sind jedoch spiegelbildlich zu einer Mittellängsebene des Fahrzeugs F auf beiden Seiten der Dachöffnung DOE angeordnet. Die Anordnung AO kann auch als Ausstellvorrichtung bezeichnet werden.

Es gilt zu beachten, dass in den Figuren 2 bis 5 lediglich der Deckelträger DT dargestellt ist, welcher mit dem Deckel D mechanisch fest gekoppelt ist. Somit ist der Deckel D mit den Ausstellmitteln direkt gekoppelt und mit Hilfe dieser bewegbar. Ein Verschieben des Deckels D ist demnach gleichbedeutend mit einem Verschieben des Deckelträgers DT.

Weiter ist in den Figuren 2 bis 5 jeweils ein Koordinatensystem dargestellt, welches die Richtungen Z und X zeigt. Die X-Richtung kann dabei auch als Fahrzeuglängsrichtung oder Horizontalrichtung bezeichnet werden. Die Z-Richtung kann auch als Vertikalrichtung bezeichnet werden.

Figur 2 zeigt eine schematische Seitenansicht einer Anordnung AO. Die Anordnung AO umfasst einen Schlitten S, der in Fahrzeuglängsrichtung mittels eines Antriebs in einer Führungsschiene FS (nicht dargestellt) verschiebbar ist. Weiter umfasst die Anordnung AO eine Ausstellstange AS, ein ortsfestes Lager L sowie einen hinteren Ausstellhebel HH. Der hintere Ausstellhebel HH ist schwenkbar mit einem Gleiter G verbunden, welcher verschiebbar an dem Deckelträger DT geführt ist. Somit ist der hintere Ausstellhebel HH schwenkbar mit dem Deckel D gekoppelt. In Figur 2 ist die Schließstellung des Deckels D dargestellt.

Wird ausgehend von der Schließstellung des Deckels D der Schlitten S verschoben, so wird die Ausstellstange AS ebenfalls parallel zur Fahrzeuglängsrichtung nach hinten verschoben, da die Ausstellstange AS mit dem Schlitten S mechanisch gekoppelt ist. Dabei wird, wie später detailliert beschrieben, der hintere Ausstellhebel HH bezüglich des Lagers L verschwenkt, sodass der Deckelträger DT beziehungsweise der Deckel D im Bereich der hinteren Kante HK ausgestellt beziehungsweise angehoben wird. In diesem Zustand befindet sich der Deckel D in der Lüfterstellung. Wird der Schlitten S weiter nach hinten verschoben, wird der Schlitten S von der Ausstellstange AS entkoppelt, wobei gleichzeitig die Ausstellstange AS durch einen nicht näher beschriebenen Verriegelungsmechanismus ortsfest bezüglich der Führungsschiene FS festgelegt wird. Dies bedeutet, dass der hintere Ausstellhebel HH ebenfalls ortsfest bezüglich der Führungsschiene FS in der ausgestellten Position arretiert ist. Beim weiteren Verschieben des Schlittens S nimmt dieser den Deckelträger DT mit und schiebt den Deckelträger DT und somit den Deckel D über das Fahrzeugdach FD in die Offenstellung. Wie beschrieben, ist hierzu der hintere Ausstellhebel HH verschiebbar über den Gleiter G mit dem Deckelträger DT gekoppelt, so dass der Deckel D relativ bezüglich des hinteren Ausstellhebels HH verschoben werden kann.

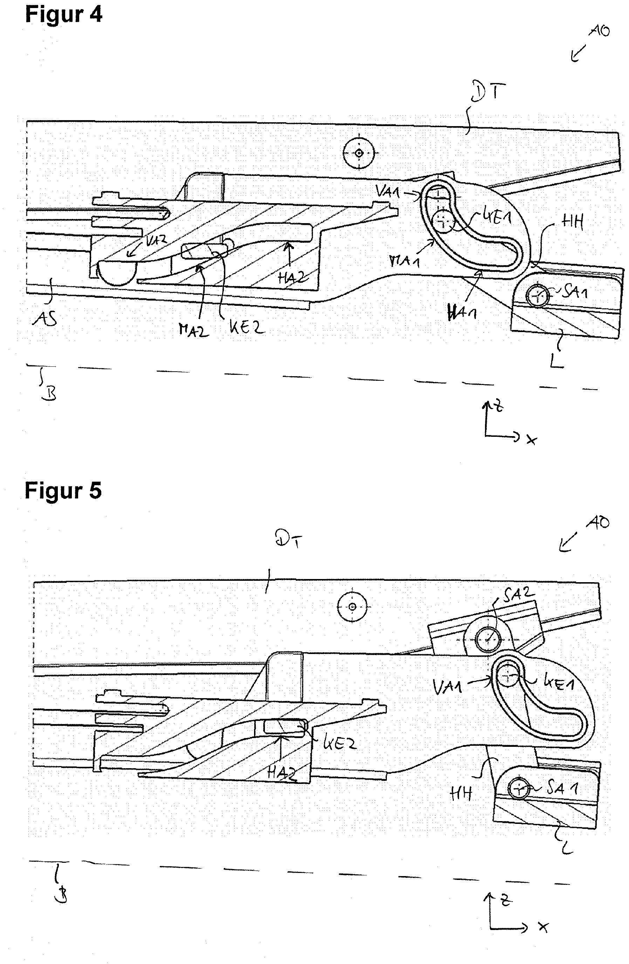

In den folgenden Figuren 3 bis 5 wird detailliert auf die Ausstellmittel der Anordnung AO im hinteren Bereich eingegangen. Figur 3 zeigt dabei die Anordnung AO in Schließstellung des Deckels D, Figur 4 zeigt die Anordnung mit einem teilweise ausgestellten Deckel D und Figur 5 zeigt die Anordnung AO in einem ausgestellten Zustand des Deckels D bzw. der Lüfterstellung. In den Figuren 3 bis 5 sind dabei jeweils teilweise geschnittene Seitenansichten der Anordnung AO schematisch dargestellt.

In den Figuren 3 bis 5 ist jeweils ein hinteres Ende der Ausstellstange AS dargestellt. Des Weiteren ist das ortsfeste Lager L, der hintere Ausstellhebel HH sowie der Deckelträger DT dargestellt. Der hintere Ausstellhebel HH ist schwenkbar bezüglich einer ersten Schwenkachse SA1 mit dem ortsfesten Lager L gekoppelt. Des Weiteren ist der hintere Ausstellhebel HH schwenkbar bezüglich einer zweiten Schwenkachse SA2 mit dem Gleiter G gekoppelt, welcher relativ verschiebbar an dem Deckelträger DT geführt ist.

Wie weiter in den Figuren 3 bis 5 zu erkennen ist, weist die Ausstellstange AS an ihrem hinteren Ende eine erste Kulisse K1 auf. Diese steht im Eingriff mit einem ersten Koppelelement KE1 des hinteren Ausstellhebels HH. In Schließstellung des Deckels D weist die erste Kulisse K1 einen Verlauf auf, bei welchem sich ein Abstand zwischen der ersten Kulisse K1 und dem Deckel D in Fahrzeuglängsrichtung nach hinten zunächst verändert und anschließend gleich bleibt. Hierzu weist der Verlauf einen vorderen Abschnitt VA1 auf, welcher im Wesentlichen vertikal verläuft. Des Weiteren weist der Verlauf einen mittleren Abschnitt MA1 auf, in welchem sich der Abstand zwischen der ersten Kulisse K1 und dem Deckel D nach hinten vergrößert. Zusätzlich weist die erste Kulisse K1 einen hinteren Abschnitt HA1 auf, in welchem der Abstand zwischen der ersten Kulisse K1 und dem Deckel D gleich bleibt. In Schließstellung des Deckels befindet sich das erste Koppelelement KE1 in dem hinteren Abschnitt HA1.

Wie in Figur 3 zu erkennen, ist das ortsfeste Lager L der Anordnung AO derart angeordnet, dass sich die erste Schwenkachse SA1 des ortsfesten Lagers L oberhalb eines gestrichelt angedeuteten Bodens B der Führungsschiene FS befindet. Als Boden B der Führungsschiene FS ist dabei eine Ebene normal zur Bildebene der Figuren 3 bis 5 zu verstehen, welche im Wesentlichen tangential zum Fahrzeugdach FD unterhalb des Schlittens S verläuft und den größten Abstand zum Deckel D in Schließstellung aufweist. Wie erwähnt, ist der Schlitten S verschiebbar in der Führungsschiene FS angeordnet, wobei die Führungsschiene FS im Wesentlichen tangential zum Fahrzeugdach FD verläuft. Die Führungsschiene FS besteht im Wesentlichen aus einem nach oben, das heißt zum Deckel D in Z-Richtung hin geöffneten C-Profil, innerhalb welchem der Schlitten S geführt ist.

Die Ausstellstange AS weist des Weiteren ein zweites Koppelelement KE2 auf, mittels welchem die Ausstellstange AS in einer bezüglich der Führungsschiene FS ortsfesten zweiten Kulisse K2 geführt ist. Die zweite Kulisse K2 weist in Schließstellung des Deckels D einen Verlauf mit einem vorderen Abschnitt VA2 auf, in welchem ein Abstand zwischen der zweiten Kulisse K2 und dem Deckel D gleich bleibt. Die zweite Kulisse K2 weist einen mittleren Abschnitt MA2 auf, in welchem sich ein Abstand zwischen der zweiten Kulisse K2 und dem Deckel D in Fahrzeuglängsrichtung nach hinten verringert. Schließlich weist die zweite Kulisse K2 einen hinteren Abschnitt HA2 auf, bei welchem ein Abstand zwischen der zweiten Kulisse K2 und dem Deckel D gleich bleibt. In Schließstellung des Deckels D befindet sich das zweite Koppelelement KE2 der Ausstellstange AS in dem vorderen Abschnitt VA2 der zweiten Kulisse K2.

Wird nun der Schlitten S in Öffnungsrichtung, also in X-Richtung mittels des Antriebs nach hinten verschoben, so wird die Ausstellstange AS aufgrund der mechanischen Kopplung zu dem Schlitten S nach hinten verschoben. Dabei bewegt sich das zweite Koppelelement KE2 in der zweiten Kulisse K2 in Richtung des mittleren Abschnitts MA2. Der hintere Ausstellhebel HH wird zunächst in seiner Position nicht verändert, also nicht um die Schwenkachse SA1 des ortsfesten Lagers L verschwenkt. Vielmehr wird die Ausstellestange AS relativ zu dem hinteren Ausstellhebel HH verschoben, wobei das erste Koppelelement KE1 des hinteren Ausstellhebels HH in der ersten Kulisse K1 in Richtung des mittleren Abschnitts MA1 geführt wird. Sobald das erste Koppelelement KE1 sich in dem mittleren Abschnitt MA1 befindet, wird durch die Bewegung des Schlittens S der hintere Ausstellhebel HH um die Schwenkachse SA1 verschwenkt, wodurch der Deckelträger DT im Bereich seiner hinteren Kante angehoben wird. Zugleich wird die Ausstellstange AS durch die zweite Kulisse K2 über das zweite Koppelelement KE2 angehoben, sodass diese eine vertikale Bewegung in Z-Richtung zusätzlich zu der Horizontalbewegung in X-Richtung erfährt. Der Deckelträger DT und somit der Deckel D sind nun zumindest teilweise ausgestellt. Dies ist in Figur 4 dargestellt.

Wird nun der Schlitten S weiter in der Führungsschiene FS nach hinten verschoben, so wird das zweite Koppelelement KE2 in der zweiten Kulisse K2 in den hinteren Abschnitt HA2 geführt und das erste Koppelelement KE1 befindet sich in dem vorderen Abschnitt VA1 der ersten Kulisse K1. Dabei erreicht der Deckel D seine maximal ausgestellte Position (s. Figur 5). Wie in Figur 5 zu erkennen ist, hat während des Ausstellvorgangs die Ausstellstange AS im Bereich ihres hinteren Endes HE, in welchem auch die erste Kulisse K1 angeordnet ist, das ortsfeste Lager L überfahren. Insbesondere hat die Ausstellstange AS eine Ebene überfahren, welche von den beiden Schwenkachsen SA1 und SA2 in Schließstellung des Deckels D aufgespannt wird. Dies bedeutet, dass die Ausstellstange AS mit Hilfe der Kulisse K2 in vertikaler Richtung derart angehoben worden ist, dass sich diese in Z-Richtung oberhalb des Lagers L sich befindet. Dies ist notwendig, damit die Ausstellstange AS beim Ausstellen des hinteren Ausstellhebels HH nicht mit dem Lager L kollidiert. Durch die Anordnung des Lagers L oberhalb des Bodens B der Führungsschiene FS, wie vorher beschrieben, kann erheblich an Bauraum eingespart werden, was unter anderem dazu führt, dass mehr Kopffreiheit in einem Fahrzeug vorgesehen werden kann.

Wird der Schlitten S weiter in der Führungsschiene VS verschoben, ausgehend von der in Figur 5 gezeigten Lüfterstellung, wird die Ausstellstange AS ortsfest bezüglich der Führungsschiene VS mittels des Verriegelungsmechanismus verriegelt und von dem Schlitten S entkoppelt. Dadurch wird der hintere Ausstellhebel HH in seiner Position gehalten. Die X-Kräfte des Deckels beziehungsweise des Deckelträgers werden dabei durch den vorderen Abschnitt VA1 der ersten Kulisse K1 auf die Ausstellstange AS übertragen.

Dadurch, dass das erste Koppelelement KE1 sehr nahe an der Kopplung zwischen dem hinteren Ausstellhebel HH und dem Gleiter G, also der zweiten Schwenkachse SA2, angeordnet ist, ist das erste Koppelelement KE1 sehr weit von der ersten Schwenkachse SA1 beziehungsweise der Kopplung zwischen dem hinteren Ausstellhebel HH und dem ortsfesten Lager L beabstandet. Dadurch wird ein großer Hebel zwischen dem ersten Koppelelement KE1 und der ersten Schwenkachse SA1 erreicht. Dies hat vorteilhaft zur Folge, dass zum Ausstellen des hinteren Ausstellhebels HH weniger Kraft zum Erzielen des notwendigen Ausstellmoments notwendig ist. Analog muss seitens der Ausstellstange AS in der ausgestellten Position gemäß Figur 5 weniger Kraft aufgebracht bzw. aufgenommen werden, um die an dem Deckel D bzw. dem Deckelträger DT vorliegenden X-Kräfte aufzunehmen. Dadurch kann der Antrieb des Schlittens S sowie die mechanischen Komponenten, beispielsweise die Ausstellstange AS und/oder der Schlitten S selbst, geringer dimensioniert sein, was Herstellungskosten, Materialkosten sowie Bauraum einspart.

Die Koppelelemente KE1 und KE2 sind als Gleitelemente ausgebildet. Sämtliche dargestellten Teile und Elemente können in ihrer expliziten Formgebung abgeändert und/oder variiert sein, wobei das grundlegende, hier erläuterte mechanische und kinematische Wirkprinzip der Anordnung AO erhalten bleiben soll.

### Bezugszeichenliste

- AO: Anordnung
- AS: Ausstellstange
- B: Boden
- BA: Befestigungsabschnitt
- D: Deckel
- DE: Dachelement
- DOE: Dachöffnung
- DRA: Dachrahmenabschnitt
- DT: Deckelträger
- F: Fahrzeug
- FD: Fahrzeugdach
- FS: Führungsschiene
- G: Gleiter
- HA1, HA2: hinterer Abschnitt
- HE: hinteres Ende
- HH: hinterer Ausstellhebel
- HK: hintere Kante
- K1: erste Kulisse
- K2: zweite Kulisse
- KE1: erstes Koppelelement
- KE2: zweites Koppelelement
- L: Lager
- MA1, MA2: mittlerer Abschnitt
- S: Schlitten
- SA1: erste Schwenkachse
- SA2: zweite Schwenkachse
- VA1, VA2: vorderer Abschnitt

## Patentansprüche

1. Anordnung (AO) mit einem Deckel (D) für ein Fahrzeugdach (FD), der ausgehend von einer Schließstellung zum Verschließen einer Dachöffnung (DOE) zum Öffnen durch Ausstellmittel in seinem hinteren Bereich anhebbar und nach hinten über das Fahrzeugdach (FD) in eine Offenstellung verschiebbar ist, wobei die Ausstellmittel
- einen in Fahrzeuglängsrichtung mittels eines Antriebs in einer Führungsschiene (FS) verschiebbaren Schlitten (S) aufweisen;
- einen bezüglich der Fahrzeuglängsrichtung hinteren Ausstellhebel (HH) aufweisen, welcher schwenkbar mit dem Deckel (D) sowie schwenkbar mit einem bezüglich der Führungsschiene (FS) ortsfesten Lager (L) gekoppelt ist und welcher ein erstes Koppelelement (KE1) aufweist; und
- eine Ausstellstange (AS) aufweisen, die mittels des Schlittens (S) zum Ausstellen des hinteren Ausstellhebels (HH) in Fahrzeuglängsrichtung verschiebbar ist; wobei die Ausstellstange (AS) derart mit dem ersten Koppelelement (KE1) gekoppelt ist, dass ausgehend von der Schließstellung des Deckels (D) bei einem Verschieben des Schlittens (S) in Fahrzeuglängsrichtung die Ausstellstange (AS) das ortsfeste Lager überfährt, **dadurch gekennzeichnet, dass** die Ausstellstange (AS) über das erste Koppelelement (KE1) mit dem hinteren Ausstellhebel (HH) schwenkbar gekoppelt ist, wobei das ortsfeste Lager (L) derart angeordnet ist, dass eine Schwenkachse (SA1) des ortsfesten Lagers (L) oberhalb eines Bodens (B) der Führungsschiene (FS) angeordnet ist.

2. Anordnung (AO) nach Anspruch 1,
wobei die Ausstellstange (AS) zur Kopplung mit dem hinteren Ausstellhebel (HH) eine erste Kulisse (K1) aufweist, welche mit dem ersten Koppelelement (KE1) des hinteren Ausstellhebels (HH) in Eingriff ist, so dass die erste Kulisse (K1) ausgehend von der Schließstellung des Deckels (D) bei Verschieben des Schlittens (S) ein Ausstellen des Deckels (D) steuert.

3. Anordnung (AO) nach Anspruch 2,
wobei die erste Kulisse (K1) in Schließstellung des Deckels (D) einen Verlauf aufweist, bei welchem sich ein Abstand zwischen der ersten Kulisse (K1) und dem Deckel (D) in Fahrzeuglängsrichtung nach hinten zunächst verändert und anschließend gleich bleibt.

4. Anordnung (AO) nach einem der Ansprüche 2 oder 3,
wobei in Schließstellung des Deckels (D) ein Verlauf der ersten Kulisse (K1) einen vorderen Abschnitt (VA1), welcher im Wesentlichen vertikal verläuft, einen mittleren Abschnitt (MA1), in welchem sich ein Abstand zwischen der ersten Kulisse (K1) und dem Deckel (D) in Fahrzeuglängsrichtung nach hinten vergrößert, sowie einen hinteren Abschnitt (HA1) aufweist, in welchem der Abstand zwischen der ersten Kulisse (K1) und dem Deckel (D) gleich bleibt.

5. Anordnung (AO) nach einem der Ansprüche 2 bis 4,
wobei das erste Koppelelement (KE1) des hinteren Ausstellhebels (HH) nahe an der schwenkbaren Kopplung zwischen dem hinteren Ausstellhebel (HH) und dem Deckel (D) angeordnet ist, insbesondere näher als an der schwenkbaren Kopplung zwischen dem hinteren Ausstellhebel (HH) und dem ortsfesten Lager (L).

6. Anordnung (AO) nach einem der Ansprüche 1 bis 5,
weiter aufweisend eine bezüglich der Führungsschiene (FS) ortsfeste zweite Kulisse (K2), und wobei die Ausstellstange (AS) ein zweites Koppelelement (KE2) aufweist, welches im Eingriff mit der zweiten Kulisse (K2) ist, so dass die zweite Kulisse (K2) ausgehend von einer Schließstellung des Deckels (D) bei Verschieben des Schlittens (S) das Überfahren des fahrzeugfesten Lagers (L) steuert.

7. Anordnung (AO) nach Anspruch 6,
wobei in Schließstellung des Deckels (D) ein Verlauf der zweiten Kulisse (K2) einen vorderen Abschnitt (VA2), bei welchem ein Abstand zwischen der zweiten Kulisse (K2) und dem Deckel (D) gleich bleibt, einen mittleren Abschnitt (MA2), bei welchem sich ein Abstand zwischen der zweiten Kulisse (K2) und dem Deckel (D) in Fahrzeuglängsrichtung nach hinten verringert, sowie einen hinteren Abschnitt (HA2) aufweist, bei welchem ein Abstand zwischen der zweiten Kulisse (K2) und dem Deckel (D) gleich bleibt.

8. Anordnung (AO) nach einem der vorhergehenden Ansprüche, wobei die Koppelelemente (KE1, KE2) als Gleitelemente ausgebildet sind, insbesondere als Drehgleiter.

## Claims

1. Arrangement (AO) with a cover (D) for a vehicle roof (FD), which cover, starting from a closed position for closing a roof opening (DOE), can be raised for opening using deployment means in the rear region thereof and which cover can be displaced toward the rear over the vehicle roof (FD) into an open position, wherein the deployment means
- have a carriage (S) which can be displaced along a vehicle longitudinal direction in a guide rail (FS) by means of a drive;
- have a rear deployment lever (HH) with respect to the vehicle longitudinal direction, which rear deployment lever is pivotably coupled to the cover (D) and which rear deployment lever is pivotably coupled to a bearing (L) which is fixed with respect to the guide rail (FS) and which has a first coupling element (KE1); and
- have a deployment rod (AS) which is, by way of the carriage (S), displaceable in the vehicle longitudinal direction for the deployment of the rear deployment lever (HH);
wherein the deployment rod (AS) is coupled to the first coupling element (KE1) such that, proceeding from the closed position of the cover (D), during a displacement of the carriage (S) in the vehicle longitudinal direction, the deployment rod (AS) overruns the fixed bearing (L), **characterized in that** the deployment rod (AS) is pivotably coupled by way of the first coupling element (KE1) to the rear deployment lever (HH), wherein the fixed bearing (L) is arranged such that a pivot axis (SA1) of the fixed bearing (L) is arranged above a base (B) of the guide rail (FS).

2. Arrangement (AO) according to Claim 1,
wherein the deployment rod (AS) has, for the coupling to the rear deployment lever (HH), a first guide slot (K1) which engages with the first coupling element (KE1) of the rear deployment lever (HH), such that, proceeding from the closed position of the cover (D), during a displacement of the carriage (S), the first guide slot (K1) controls a deployment of the cover (D).

3. Arrangement (AO) according to Claim 2,
wherein the first guide slot (K1) has in the closed position of the cover (D) a profile in which, toward the rear in the vehicle longitudinal direction, a spacing between the fixed guide slot (K1) and the cover (D) initially varies and subsequently remains constant.

4. Arrangement (AO) according to either of Claims 2 and 3, wherein, in the closed position of the cover (D), a profile of the first guide slot (K1) has a front section (VA1), which runs substantially vertically, a middle section (MA1), in which a spacing between the first guide slot (K1) and the cover (D) increases toward the rear in a vehicle longitudinal direction, and a rear section (HA1), in which the spacing between the first guide slot (K1) and the cover (D) remains constant.

5. Arrangement (AO) according to one of Claims 2 to 4,
wherein the first coupling element (KE1) of the rear deployment lever (HH) is arranged close to the pivotable coupling between the rear deployment lever (HH) and the cover (D), in particular closer to the aforementioned pivotable coupling than to the pivotable coupling between the rear deployment lever (HH) and the fixed bearing (L).

6. Arrangement (AO) according to one of Claims 1 to 5, furthermore having a second guide slot (K2) which is fixed with respect to the guide rail (FS), and wherein the deployment rod (AS) has a second coupling element (KE2) which engages with the second guide slot (K2), such that, proceeding from a closed position of the cover (D), during a displacement of the carriage (S), the second guide slot (K2) controls the overrun of the bearing (L) secured to the vehicle.

7. Arrangement (AO) according to Claim 6,
wherein, in the closed position of the cover (D), a profile of the second guide slot (K2) has a front section (VA2), in which a spacing between the second guide slot (K2) and the cover (D) remains constant, a middle section (MA2), in which a spacing between the second guide slot (K2) and the cover (D) decreases toward the rear in the vehicle longitudinal direction, and a rear section (HA2), in which a spacing between the second guide slot (K2) and the cover (D) remains constant.

8. Arrangement (AO) according to one of the preceding claims, wherein the coupling elements (KE1, KE2) are in the form of slide elements, in particular of rotary sliders.

## Revendications

1. Dispositif (AO) avec une couverture (D) pour un toit de véhicule (FD), qui peut, à partir d'une position de fermeture pour fermer une ouverture de toit (DOE), être soulevé dans sa région arrière pour l'ouverture par des moyens d'écartement et être déplacé vers l'arrière au-dessus du toit de véhicule (FD) dans une position d'ouverture, dans lequel les moyens d'écartement présentent
- un chariot (S) déplaçable dans une direction longitudinale du véhicule dans un rail de guidage (FS) au moyen d'un entraînement;
- un levier d'écartement arrière (HH) par rapport à la direction longitudinale du véhicule, qui est couplé de façon pivotante à la couverture (D) et de façon pivotante à un palier (L) fixe par rapport au rail de guidage (FS) et qui présente un premier élément de couplage (KE1); et
- une barre d'écartement (AS), qui est déplaçable dans la direction longitudinale du véhicule au moyen du chariot (S) pour écarter le levier d'écartement arrière (HH);
dans lequel la barre d'écartement (AS) est couplée au premier élément de couplage (KE1) de telle manière qu'à partir de la position de fermeture de la couverture (D) lors d'un déplacement du chariot (S) dans la direction longitudinale du véhicule, la barre d'écartement (AS) franchisse le palier fixe (L), **caractérisé en ce que** la barre d'écartement (AS) est couplée au levier d'écartement arrière (HH) au moyen du premier élément de couplage (KE1), dans lequel le palier fixe (L) est disposé de telle manière qu'un axe de pivotement (SA1) du palier fixe (L) soit disposé au-dessus d'un fond (B) du rail de guidage (FS).

2. Dispositif (AO) selon la revendication 1, dans lequel la barre d'écartement (AS) présente pour le couplage avec le levier d'écartement arrière (HH) une première coulisse (K1), qui est en prise avec le premier élément de couplage (KE1) du levier d'écartement arrière (HH), de telle manière que la première coulisse (K1) commande un écartement de la couverture (D) à partir de la position de fermeture de la couverture (D) lors du déplacement du chariot (S).

3. Dispositif (AO) selon la revendication 2, dans lequel la première coulisse (K1) présente dans la position de fermeture de la couverture (D) un tracé, par lequel une distance entre la première coulisse (K1) et la couverture (D) change d'abord vers l'arrière dans la direction longitudinale du véhicule et reste ensuite constante.

4. Dispositif (AO) selon une des revendications 2 ou 3, dans lequel dans la position de fermeture de la couverture (D) un tracé de la première coulisse (K1) présente une partie avant (VA1), qui s'étend essentiellement verticalement, une partie moyenne (MA1), dans laquelle une distance entre la première coulisse (K1) et la couverture (D) augmente vers l'arrière dans la direction longitudinale du véhicule, ainsi qu'une partie arrière (HA1), dans laquelle la distance entre la première coulisse (K1) et la couverture (D) reste constante.

5. Dispositif (AO) selon l'une quelconque des revendications 2 à 4, dans lequel le premier élément de couplage (KE1) du levier d'écartement arrière (HH) est disposé à proximité du couplage pivotant entre le levier d'écartement arrière (HH) et la couverture (D), en particulier plus près que du couplage pivotant entre le levier d'écartement arrière (HH) et le palier fixe (L).

6. Dispositif (AO) selon l'une quelconque des revendications 1 à 5, présentant en outre une deuxième coulisse (K2) fixe par rapport au rail de guidage (FS), et dans lequel la barre d'écartement (AS) présente un deuxième élément de couplage (KE2), qui est en prise avec la deuxième coulisse (K2), de telle manière que la deuxième coulisse (K2) commande le franchissement du palier (L) fixe sur le véhicule lors du déplacement du chariot (S) à partir d'une position de fermeture de la couverture (D).

7. Dispositif (AO) selon la revendication 6, dans lequel dans la position de fermeture de la couverture (D) un tracé de la deuxième coulisse (K2) présente une partie avant (VA2), dans laquelle une distance entre la deuxième coulisse (K2) et la couverture (D) reste constante, une partie moyenne (MA2), dans laquelle une distance entre la deuxième coulisse (K2) et la couverture (D) diminue vers l'arrière dans la direction longitudinale du véhicule, ainsi qu'une partie arrière (HA2), dans laquelle la distance entre la deuxième coulisse (K2) et la couverture (D) reste constante.

8. Dispositif (AO) selon l'une quelconque des revendications précédentes, dans lequel les éléments de couplage (KE1, KE2) sont réalisés sous forme d'éléments glissants, en particulier de coulisseaux rotatifs.
